# EUROPEAN PATENT SPECIFICATION

(11) **EP 3 091 469 B1**
(45) Date of publication and mention of the grant of the patent: **04.09.2019**
(21) Application number: 14877103.3
(22) Date of filing: 18.06.2014
(51) Int. Cl.: G06F 21/60, G06F 21/62

(54) **DATA CARD APPLICATION METHOD AND DATA CARD**
DATENKARTENANWENDUNGSVERFAHREN UND DATENKARTE
PROCÉDÉ D'APPLICATION D'UNE CARTE DE DONNÉES ET CARTE DE DONNÉES

(30) Priority: 02.01.2014 CN 201410002117
(43) Date of publication of application: 09.11.2016
(73) Proprietor: ZTE Corporation, Shenzhen, Guangdong 518057 (CN)
(72) Inventor: CHAO, Penghui, Shenzhen Guangdong 518057 (CN); ZHANG, Jingrui, Shenzhen Guangdong 518057 (CN)
(74) Representative: Mozzi, Matteo
(86) International application number: PCT/CN2014/080253
(87) International publication number: WO 2015/100963

(56) References cited:
- EP-A1- 2 523 116
- CN-A- 102 075 608
- CN-A- 102 541 475
- CN-A- 102 799 540
- CN-A- 103 136 483
- US-A1- 2009 172 384
- US-A1- 2012 020 394
- Anonymous: "USB 3G Modem - ArchWiki", , 24 November 2013 (2013-11-24), XP055319985, Retrieved from the Internet: URL:https://wiki.archlinux.org/index.php?t itle=USB_3G_Modem&oldid=284443 [retrieved on 2016-11-16]

## Description

### Technical Field

The present disclosure relates to the field of communication technologies, and in particular to a data card application method and a data card.

### Background

With the development of communication technologies, communication methods between network terminals become increasingly rich. Data card (also called wireless modem) is a new interconnecting device commonly used in high-speed mobile data networks, and also can be used for wireless Internet access of network devices. Data card, due to its small volume, quick transmission speed, convenience and flexibility, has increasingly gained the popularity among users.

Secure Digital (SD) memory card is a storage device based on semiconductor flash memory, with various advantages such as big capacity, high speed and low power consumption, and has been widely applied to mobile phones, digital cameras and other electronic products. At present, many electronic products are equipped with an extended interface for SD card. Generally, when being used, an SD card is inserted into a card reader or a data card, then the card reader or the data card is connected to a network terminal, so that the network terminal can use the files in the SD card.

However, since data cards provided in the related art have no further restrictions or corresponding protection measures, some personnel in the enterprise can easily copy information from a network terminal using an internally provided data card or SD card, which makes it easy to leak enterprise information and thereby causes loss, however large or small, to the enterprise.

The possibility for such data cards providing two different modes, namely as a USB flash drive or as a modem is known e.g. from https://wiki.archlinux.org/index.php? title=USB_3G_Modem&oldid=284443.

The above content is only to help understand the technical solution of the present disclosure, but to acknowledge the above content is the convention art.

### Summary

The embodiments of the present disclosure provide a data card application method and a data card, so as to place some restrictions for a memory card using the data card and to improve the security of internal information of an enterprise.

To achieve the above purpose, an embodiment of the present disclosure provides a data card application method, including:
after a data card is connected to a terminal and a memory card is inserted into the data card, a usage state of the memory card is determined during initialization of the data card;
when the usage state of the memory card is modified, configuration information in the data card is modified when modification passwords acquired twice are consistent; and
the usage state of the memory card is re-determined according to the modified configuration information, and a corresponding operation is performed on the memory card according to the re-determined usage state.

In an exemplary embodiment, after the data card is connected to the terminal and the memory card is inserted into the data card, determining the usage state of the memory card during initialization of the data card may include:
the usage state of the memory card is determined by reading the configuration information in the data card during initialization of the data card, in the embodiment, the usage state includes an enabled state and a disabled state.

In an exemplary embodiment, when the current usage state of the memory card is modified from the enabled state into the disabled state, modifying the configuration information in the data card when the modification passwords acquired twice are consistent may include:
when it is the first time to disable the memory card, a first modification password and a second modification password input successively are acquired;
when the second modification password is consistent with the first modification password, the configuration information in the data card is modified;
when it is not the first time to disable the memory card, a first modification password input and a pre-stored modification password in the data card are acquired;
when the pre-stored modification password in the data card is consistent with the first modification password, the configuration information in the data card is modified.

In an exemplary embodiment, when the current usage state of the memory card is modified from the disabled state into the enabled state, modifying the configuration information in the data card when the modification passwords acquired twice are consistent may include:
a first modification password input and a pre-stored modification password in the data card are acquired;
when the first modification password is consistent with the pre-stored modification password in the data card, the configuration information in the data card is modified.

In an exemplary embodiment, the method may further include: in a case that there is a pre-stored modification password in the data card, the pre-stored modification password in the data card is modified and the modified modification password is stored.

Another embodiment of the present disclosure provides a data card, including:
a determination component, which is configured to determine, after a data card is connected to a terminal and a memory card is inserted into the data card, a usage state of the memory card during initialization of the data card;
a modification component, which is configured to modify, when the usage state of the memory card is modified, configuration information in the data card when modification passwords acquired twice are consistent; and
an operation component, which is configured to re-determine the usage state of the memory card according to the modified configuration information, and perform a corresponding operation on the memory card according to the re-determined usage state.

In an exemplary embodiment, the determination component is configured to determine the usage state of the memory card by reading the configuration information in the data card during initialization of the data card, in the embodiment, the usage state includes an enabled state and a disabled state.

In an exemplary embodiment, when the current usage state of the memory card is modified from the enabled state into the disabled state, the modification operation component may include:
a first acquisition element, which is configured to acquire a first modification password and a second modification password input successively when it is the first time to disable the memory card;
a first modification element, which is configured to modify the configuration information in the data card when the second modification password is consistent with the first modification password;
a second acquisition element, which is configured to acquire a first modification password input and a pre-stored modification password in the data card when it is not the first time to disable the memory card;
a second modification element, which is configured to modify the configuration information in the data card when the pre-stored modification password in the data card is consistent with the first modification password.

In an exemplary embodiment, when the current usage state of the memory card is modified from the disabled state into the enabled state, the modification component may include:
a third acquisition element, which is configured to acquire a first modification password input and a pre-stored modification password in the data card;
a third modification element, which is configured to modify the configuration information in the data card when the first modification password is consistent with the pre-stored modification password in the data card.

In an exemplary embodiment, the data card may further include a password modification component, which is configured to, in a case that there is a pre-stored modification password in the data card, modify the pre-stored modification password in the data card and store the modified modification password.

According to the data card application method and the data card provided in the embodiments of the present disclosure, whether a usage state of a memory card is an enabled state or a disabled state is determined for the first time by reading configuration information in the data card during initialization of the data card. When it is needed to modify the usage state of the memory card, the configuration information in the data card can be modified only when modification passwords acquired twice are consistent. In this way, through twice acquisitions of modification passwords, it is ensured that the configuration information in the data card cannot be modified arbitrarily, that is, restrictions are placed for the memory card using the data card, information cannot be copied from a network terminal easily and the security of internal information of an enterprise is improved.

### Brief Description of the Drawings

Fig. 1 is a flowchart of a data card application method according to an embodiment of the present disclosure;
Fig. 2 is a detailed flowchart of an embodiment of Step S102 shown in Fig. 1 when the current usage state of the memory card is modified from the enabled state into the disabled state;
Fig. 3 is a detailed flowchart of another embodiment of Step S102 shown in Fig. 1 when the current usage state of the memory card is modified from the enabled state into the disabled state; and
Fig. 4 is a diagram showing functional components of a data card according to an embodiment of the present disclosure.

The implementation of the purpose of the embodiments of the present disclosure, the function features and advantages thereof are described below in further detail in conjunction with embodiments by reference to accompanying drawings.

### Detailed Description of the Embodiments

It should be understood that specific embodiments described below are only to illustrate the present disclosure but to limit the present disclosure.

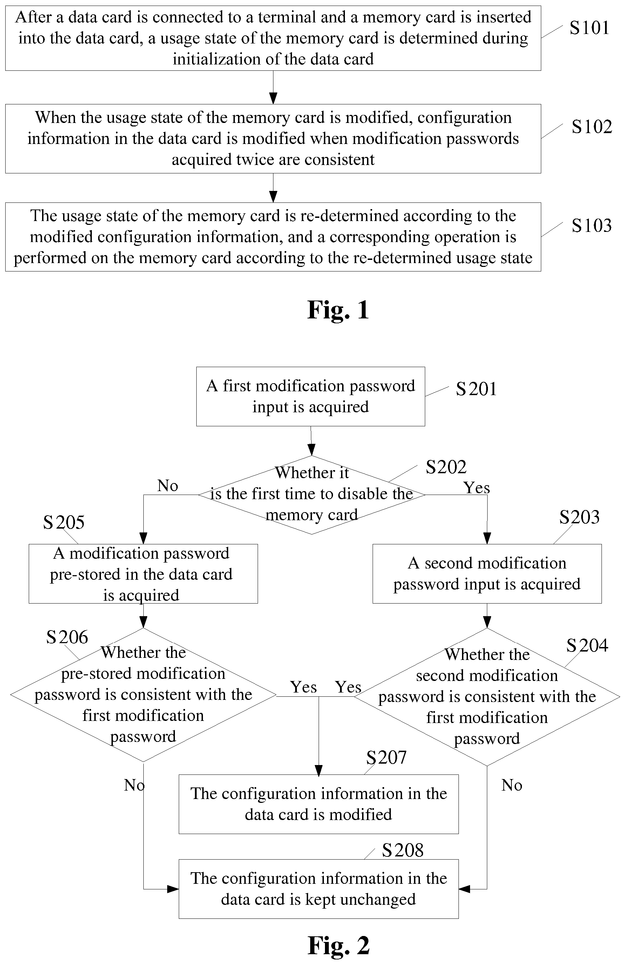

An embodiment of the present disclosure provides a data card application method. As shown in Fig. 1, the data card application method may include the following steps:
Step S101: after a data card is connected to a terminal and a memory card is inserted into the data card, a usage state of the memory card is determined during initialization of the data card.

After the data card is connected to the terminal and the memory card is inserted into the data card, the usage state of the memory card may be determined by reading configuration information in the data card during the initialization of the data card. The configuration information may be stored in the data card. In the embodiment, the usage state of the memory card may include an enabled state and a disabled state.

Specifically, if the configuration information in the data card indicates that the usage state of the memory card is the enabled state, the memory card is mounted as a storage device of the terminal during the initialization of the data card, so that the terminal and the memory card are interconnected. If the configuration information in the data card indicates that the usage state of the memory card is the disabled state, the memory card is forbidden to interconnect with the terminal during initialization of the data card.

In an exemplary embodiment, the memory card may be an SD card.

Step S102: when the usage state of the memory card is modified, the configuration information in the data card is modified when modification passwords acquired twice are consistent.

After it is determined that the usage state of the memory card is the enabled state or the disabled state, the usage state of the memory card may be further modified by modifying the configuration information stored in the data card. However, in a case that the memory card is not inserted into the data card, it is forbidden to modify the configuration information in the data card.

When the usage state of the memory card is modified, Connection Manager of the data card may acquire modification passwords successively. In the case that the modification passwords acquired twice are consistent, the configuration information can be modified. In this way, it is ensured that the configuration information cannot be arbitrarily modified.

One of the modification passwords may be a modification password input by a terminal user, while the other one may be a modification password input by the terminal user or a pre-stored modification password in the data card. The form of the modification password is not limited, and may be various forms, for example, cipher form or problem form and the like.

The configuration information is modified when the modification passwords acquired twice are consistent. Specifically, the configuration information may be modified through the Connection Manager of the data card using an extended AT command.

Step S103: the usage state of the memory card is re-determined according to the modified configuration information, and a corresponding operation is performed on the memory card according to the re-determined usage state.

In a case that the enabled state is modified into the disabled state in the configuration information, it is re-determined that the current usage state of the memory card is the disabled state; in the case that the disabled state is modified into the enabled state in the configuration information, it is re-determined that the current usage state of the memory card is the enabled state.

In this embodiment, in the case that the usage state of the memory card is the enabled state, this memory card is mounted as a storage device of the terminal, so that the terminal and the memory card are interconnected; while in the case that the usage state of the memory card is the disabled state, the memory card is removed.

In this embodiment, whether a usage state of a memory card is an enabled state or a disabled state is determined for the first time by reading the configuration information in a data card during initialization of the data card. When it is needed to modify the usage state of the memory card, the configuration information in the data card can be modified only when modification passwords acquired twice are consistent. In this way, through twice acquisitions of modification passwords, it is ensured that the configuration information in the data card cannot be modified arbitrarily, that is, restrictions are placed for the memory card using the data card, information cannot be copied from a network terminal easily and the security of internal information of an enterprise is improved.

In an exemplary embodiment, based on the embodiment shown in Fig. 1, the method may further include the following step: in the case that there is a pre-stored modification password in the data card, the pre-stored modification password in the data card is modified and the modified modification password is stored.

In order to further ensure the usage security of the data card, in this embodiment, in the case that there is a pre-stored modification password in the data card, a user also can modify the pre-stored modification password in the data card.

The change of the pre-stored modification password in the data card may be implemented in the following manner. First, a password is input; when the data card judges that the input password is consistent with a pre-stored modification password in the data card, a new password is input and the new password is input again for confirmation; after the above process is completed, the data card stores the new password as the pre-stored modification password to be used subsequently.

In an exemplary embodiment, as shown in Fig. 2, when the current usage state of the memory card is modified from the enabled state into the disabled state, Step S102 may include:
S201: a first modification password input is acquired.
S202: whether it is the first time that the data card disables the memory card is judged; if so, S203 is executed; otherwise, S205 is executed.
S203: a second modification password input is acquired.
S204: whether the second modification password is consistent with the first modification password is judged; if so, S207 is executed; otherwise, S208 is executed.
S205: a pre-stored modification password in the data card is acquired.
S206: whether the pre-stored modification password in the data card is consistent with the first modification password is judged; if so, S207 is executed; otherwise, S208 is executed.
S207: the configuration information in the data card is modified; the process ends.
S208: the configuration information in the data card is kept unchanged; the process ends.

In this embodiment, the data card enables the memory card by default. When disabling the memory card for the first time, a user needs to input a first modification password, and inputs again a second modification password for confirmation; this modification password is then recorded in the data card.

The first modification password and the second modification password are passwords input by the user. The pre-stored modification password is a password stored in the data card. The pre-stored modification password is actually a modification password input by the user the last time. After the user inputs a modification password each time, the data card records and stores the modification password. In a case that there is no pre-stored modification password in the data card, that is, it is the first time the data card disables the memory card, the user is required to input the same modification password twice and the data card stores the modification password to be used subsequently.

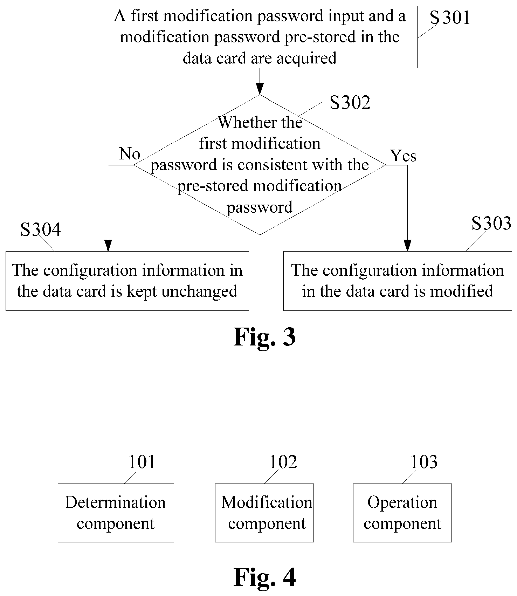

In another exemplary embodiment, as shown in Fig. 3, when the current usage state of the memory card is modified from the disabled state into the enabled state, Step S102 may include:
Step S301: a first modification password input and a pre-stored modification password in the data card are acquired.
Step S302: whether the first modification password is consistent with the pre-stored modification password in the data card is judged; if so, Step S303 is executed; otherwise, Step S304 is executed.
Step S303: the configuration information in the data card is modified.
Step S304: the configuration information in the data card is kept unchanged.

The embodiment of the present disclosure provides a data card, as shown in Fig. 4, the data card may include the following components:
a determination component 101, which is configured to determine, after a data card is connected to a terminal and a memory card is inserted into the data card, a usage state of the memory card during initialization of the data card.

After the data card is connected to the terminal and the memory card is inserted into the data card, the determination component 101 determines the usage state of the memory card by reading the configuration information in the data card during initialization of the data card. The configuration information is stored in the data card, in the embodiment, the usage state of the memory card may include an enabled state and a disabled state.

Specifically, in the case that the configuration information in the data card indicates the usage state of the memory card is the enabled state, the memory card is mounted as a storage device of the terminal during initialization of the data card, so that the terminal and the memory card are interconnected; while in the case that the configuration information in the data card indicates the usage state of the memory card is the disabled state, the memory card is forbidden to interconnect with the terminal during initialization of the data card.

In an exemplary embodiment, the memory card may be an SD card.

A modification component 102, which is configured to modify, when the usage state of the memory card is modified, configuration information in the data card when modification passwords acquired twice are consistent.

After it is determined that the usage state of the memory card is the enabled state or the disabled state, the modification component 102 also can modify the usage state of the memory card by modifying the configuration information stored in the data card. However, in the case that the memory card is not inserted into the data card, it is forbidden to modify the configuration information in the data card.

When the usage state of the memory card is modified, the Connection Manager of the data card may acquire modification passwords successively; in the case that the modification passwords acquired twice are consistent, the configuration information can be modified. In this way, it is ensured that the configuration information cannot be arbitrarily modified.

One of the modification passwords may be a modification password input by a terminal user, while the other one may be a modification password input by the terminal user or a pre-stored modification password in the data card. The form of the modification password is not limited, and may be various forms, for example, cipher form or problem form and the like.

The configuration information is modified when the modification passwords acquired twice are consistent. Specifically, the configuration information may be modified through the Connection Manager of the data card using an extended AT command.

An operation component 103, which is configured to re-determine the usage state of the memory card according to the modified configuration information and perform a corresponding operation on the memory card according to the re-determined usage state.

In a case that the enabled state is modified into the disabled state in the configuration information, it is re-determined that the current usage state of the memory card is the disabled state; in the case that the disabled state is modified into the enabled state in the configuration information, it is re-determined that the current usage state of the memory card is the enabled state.

In this embodiment, in the case that the usage state of the memory card is the enabled state, this memory card is mounted as a storage device of the terminal, so that the terminal and the memory card are interconnected; while in the case that the usage state of the memory card is the disabled state, the memory card is removed.

In an exemplary embodiment, based on the embodiment shown in Fig. 4, the data card may further include a password modification component, which is configured to modify, in the case that there is a pre-stored modification password in the data card, the pre-stored modification password in the data card and store the modified modification password.

In order to further ensure the usage security of the data card, in this embodiment, in the case that there is a pre-stored modification password in the data card, a user also can modify the pre-stored modification password in the data card.

The change of the pre-stored modification password in the data card may be implemented in the following manner. First, a password is input; when the data card judges that the input password is consistent with a pre-stored modification password in the data card, a new password is input and the new password is input again for confirmation; after the above process is completed, the data card stores the new password as the pre-stored modification password to be used subsequently.

In an exemplary embodiment, when the current usage state of the memory card is modified from the enabled state into the disabled state, the modification component 102 may include:
a first acquisition element, which is configured to acquire a first modification password and a second modification password input successively when it is the first time to disable the memory card;
a first modification element, which is configured to modify the configuration information in the data card when the second modification password is consistent with the first modification password;
a second acquisition element, which is configured to acquire a first modification password input and a pre-stored modification password in the data card when it is not the first time to disable the memory card;
a second modification element, which is configured to modify the configuration information in the data card when the pre-stored modification password in the data card is consistent with the first modification password.

In this embodiment, the data card enables the memory card by default. When disabling the memory card for the first time, a user needs to input a first modification password, and inputs again a second modification password for confirmation; this modification password is then recorded in the data card.

The first modification password and the second modification password are passwords input by the user. The pre-stored modification password is a password stored in the data card. The pre-stored modification password is actually a modification password input by the user the last time. After the user inputs a modification password each time, the data card records and stores the modification password. In a case that there is no pre-stored modification password in the data card, that is, it is the first time the data card disables the memory card, the user is required to input the same modification password twice and the data card stores the modification password to be used subsequently.

In another exemplary embodiment, when the current usage state of the memory card is modified from the disabled state into the enabled state, the modification component 102 may include:
a third acquisition element, which is configured to acquire a first modification password input and a pre-stored modification password in the data card;
a third modification element, which is configured to modify the configuration information in the data card when the first modification password is consistent with the pre-stored modification password in the data card.

The sequence number of the above embodiments of the present disclosure is for description only but to represent the superiority of the embodiments. Through the description of the above implementation, those skilled in the art can clearly learn that the embodiment methods above can be implemented by means of software plus necessary general hardware platforms, and of course can be implemented through hardware; however, in most conditions the former one is better. Based on this understanding, in the technical scheme of the embodiments of the present disclosure, the part essentially making a contribution to the conventional art can be embodied in a form of software product; the computer software product is stored in a storage medium (for example, Read-Only Memory (ROM)/Random-Access Memory (RAM), magnetic disk, compact disc), including multiple instructions to enable a terminal device (which can be a mobile phone, a computer, a server, or a network device and the like) to execute the method described in each embodiment of the present disclosure.

The above are only the exemplary embodiments of the present disclosure and are not intended to limit the patent scope of the present disclosure. Any equivalent structures or equivalent flow modifications made according to the description and the accompanying drawings of the present disclosure, or any equivalent structures or equivalent flow modifications applied in other relevant technical fields directly or indirectly are intended to be included in the patent protection scope of the present disclosure.

### Industrial Applicability

The above technical solution provided by the present disclosure is applied to the application process of a data card. In the technical solution, whether a usage state of a memory card is an enabled state or a disabled state is determined for the first time by reading configuration information in a data card during initialization of the data card. When it is needed to modify the usage state of the memory card, the configuration information in the data card can be modified only when modification passwords acquired twice are consistent. In this way, through twice acquisitions of modification passwords, it is ensured that the configuration information in the data card cannot be modified arbitrarily, that is, restrictions are placed for the memory card using the data card, information cannot be copied from a network terminal easily and the security of internal information of an enterprise is improved.

## Claims

1. A data card application method, comprising:
after a data card is connected to a terminal and a memory card is inserted into the data card, determining a usage state of the memory card during initialization of the data card;
when the usage state of the memory card is modified, modifying configuration information in the data card when modification passwords acquired twice are consistent; and
re-determining the usage state of the memory card according to the modified configuration information, and performing a corresponding operation on the memory card according to the re-determined usage state.

2. The data card application method as claimed in claim 1, wherein after the data card is connected to the terminal and the memory card is inserted into the data card, determining the usage state of the memory card during initialization of the data card comprises:
determining the usage state of the memory card by reading the configuration information in the data card during initialization of the data card, wherein the usage state comprises an enabled state and a disabled state.

3. The data card application method as claimed in claim 2, wherein when the current usage state of the memory card is modified from the enabled state into the disabled state, modifying the configuration information in the data card when the modification passwords acquired twice are consistent comprises:
when it is the first time to disable the memory card, acquiring a first modification password and a second modification password input successively;
when the second modification password is consistent with the first modification password, modifying the configuration information in the data card;
when it is not the first time to disable the memory card, acquiring a first modification password input and a pre-stored modification password in the data card;
when the pre-stored modification password in the data card is consistent with the first modification password, modifying the configuration information in the data card.

4. The data card application method as claimed in claim 2, wherein when the current usage state of the memory card is modified from the disabled state into the enabled state, modifying the configuration information in the data card when the modification passwords acquired twice are consistent comprises:
acquiring a first modification password input and a pre-stored modification password in the data card;
when the first modification password is consistent with the pre-stored modification password in the data card, modifying the configuration information in the data card.

5. The data card application method as claimed in any one of claims 2 to 4, wherein
in a case that the configuration information in the data card indicates the usage state of the memory card is the enabled state, the memory card is mounted as a storage device of the terminal during initialization of the data card, so that the terminal and the memory card are interconnected;
in a case that the configuration information in the data card indicates the usage state of the memory card is the disabled state, the memory card is forbidden to interconnect with the terminal during initialization of the data card or is removed.

6. The data card application method as claimed in claim 1, further comprising: in a case that there is a pre-stored modification password in the data card, modifying the pre-stored modification password in the data card and storing the modified modification password.

7. The data card application method as claimed in any one of claims 1 to 6, wherein in a case that the memory card is not inserted into the data card, it is forbidden to modify the configuration information in the data card.

8. The data card application method as claimed in any one of claims 1 to 6, wherein the memory card is a Secure Digital (SD) card.

9. The data card application method as claimed in any one of claims 1 to 6, wherein the configuration information is modified through a Connection Manager of the data card using an extended AT command.

10. A data card, comprising:
a determination component, which is configured to determine, after a data card is connected to a terminal and a memory card is inserted into the data card, a usage state of the memory card during initialization of the data card;
a modification component, which is configured to modify, when the usage state of the memory card is modified, configuration information in the data card when modification passwords acquired twice are consistent; and
an operation component, which is configured to re-determine the usage state of the memory card according to the modified configuration information, and perform a corresponding operation on the memory card according to the re-determined usage state.

11. The data card as claimed in claim 10, wherein the determination component is configured to determine the usage state of the memory card by reading the configuration information in the data card during initialization of the data card, wherein the usage state comprises an enabled state and a disabled state.

12. The data card as claimed in claim 11, wherein when the current usage state of the memory card is modified from the enabled state into the disabled state, the modification operation component comprises:
a first acquisition element, which is configured to acquire a first modification password and a second modification password input successively when it is the first time to disable the memory card;
a first modification element, which is configured to modify the configuration information in the data card when the second modification password is consistent with the first modification password;
a second acquisition element, which is configured to acquire a first modification password input and a pre-stored modification password in the data card when it is not the first time to disable the memory card;
a second modification element, which is configured to modify the configuration information in the data card when the pre-stored modification password in the data card is consistent with the first modification password.

13. The data card as claimed in claim 11, wherein when the current usage state of the memory card is modified from the disabled state into the enabled state, the modification component comprises:
a third acquisition element, which is configured to acquire a first modification password input and a pre-stored modification password in the data card;
a third modification element, which is configured to modify the configuration information in the data card when the first modification password is consistent with the pre-stored modification password in the data card.

14. The data card as claimed in claim 10, further comprising: a password modification component, which is configured to, in a case that there is a pre-stored modification password in the data card, modify the pre-stored modification password in the data card and store the modified modification password.

## Patentansprüche

1. Datenkartenanwendungsverfahren, umfassend:
Ermitteln eines Verwendungszustands der Speicherkarte während der Initialisierung der Datenkarte, nachdem eine Datenkarte mit einem Endgerät verbunden und eine Speicherkarte in die Datenkarte eingesetzt wurde;
wenn der Verwendungszustand der Speicherkarte geändert wird, Ändern der Konfigurationsinformationen in der Datenkarte, wenn zweimal erfasste Änderungskennwörter übereinstimmen; und
erneutes Ermitteln des Verwendungszustands der Speicherkarte gemäß den geänderten Konfigurationsinformationen und Durchführen einer entsprechenden Operation auf der Speicherkarte gemäß dem erneut ermittelten Verwendungszustand.

2. Datenkartenanwendungsverfahren nach Anspruch 1, wobei das Ermitteln des Verwendungszustands der Speicherkarte während der Initialisierung der Datenkarte umfasst, nachdem die Datenkarte mit dem Endgerät verbunden und die Speicherkarte in die Datenkarte eingeführt wurde:
Ermitteln des Verwendungszustands der Speicherkarte durch Lesen der Konfigurationsinformationen in der Datenkarte während der Initialisierung der Datenkarte, wobei der Verwendungszustand einen aktivierten Zustand und einen deaktivierten Zustand umfasst.

3. Datenkartenanwendungsverfahren nach Anspruch 2, wobei, wenn der aktuelle Verwendungszustand der Speicherkarte vom aktivierten Zustand in den deaktivierten Zustand geändert wird, das Ändern der Konfigurationsinformationen in der Datenkarte umfasst, wenn die zweimal erfassten Änderungskennwörter übereinstimmen:
wenn die Speicherkarte zum ersten Mal deaktiviert wird, Erfassen eines nacheinander eingegebenen ersten Änderungskennworts und eines zweiten Änderungskennworts;
wenn das zweite Änderungskennwort mit dem ersten Änderungskennwort übereinstimmt, Ändern der Konfigurationsinformationen in der Datenkarte;
wenn die Speicherkarte nicht zum ersten Mal deaktiviert wird, Erfassen einer ersten Änderungskennworteingabe und eines vorab gespeicherten Änderungskennworts in der Datenkarte;
wenn das vorab auf der Datenkarte gespeicherte Änderungskennwort mit dem ersten Änderungskennwort übereinstimmt, Ändern der Konfigurationsinformationen in der Datenkarte.

4. Datenkartenanwendungsverfahren nach Anspruch 2, wobei, wenn der aktuelle Verwendungszustand der Speicherkarte vom deaktivierten Zustand in den aktivierten Zustand geändert wird, das Ändern der Konfigurationsinformationen in der Datenkarte umfasst, wenn die zweimal erfassten Änderungskennwörter übereinstimmen:
Erfassen einer ersten Änderungskennworteingabe und eines vorab gespeicherten Änderungskennworts in der Datenkarte;
wenn das erste Änderungskennwort mit dem vorab gespeicherten Änderungskennwort in der Datenkarte übereinstimmt, Ändern der Konfigurationsinformationen in der Datenkarte.

5. Datenkartenanwendungsverfahren nach einem der Ansprüche 2 bis 4, wobei
in dem Fall, dass die Konfigurationsinformationen in der Datenkarte angeben, dass der Verwendungszustand der Speicherkarte der aktivierte Zustand ist, die Speicherkarte während der Initialisierung der Datenkarte als Speichervorrichtung des Endgeräts gemounted wird, sodass das Endgerät und die Speicherkarte miteinander verbunden sind;
in dem Fall, dass die Konfigurationsinformationen auf der Datenkarte angeben, dass der Verwendungszustand der Speicherkarte der deaktivierte Zustand ist, es der Speicherkarte untersagt ist, während der Initialisierung der Datenkarte eine Verbindung mit dem Endgerät herzustellen oder sie entfernt wird.

6. Datenkartenanwendungsverfahren nach Anspruch 1, ferner umfassend: in einem Fall, dass ein vorab gespeichertes Änderungskennwort in der Datenkarte vorliegt, Ändern des vorab gespeicherten Änderungskennworts in der Datenkarte und Speichern des geänderten Änderungskennworts.

7. Datenkartenanwendungsverfahren nach einem der Ansprüche 1 bis 6, wobei es in einem Fall, in dem die Speicherkarte nicht in die Datenkarte eingesetzt ist, untersagt ist, die Konfigurationsinformationen in der Datenkarte zu ändern.

8. Datenkartenanwendungsverfahren nach einem der Ansprüche 1 bis 6, wobei die Speicherkarte eine Secure-Digital-Karte (SD-Karte) ist.

9. Datenkartenanwendungsverfahren nach einem der Ansprüche 1 bis 6, wobei die Konfigurationsinformationen durch einen Verbindungsmanager der Datenkarte unter Verwendung eines erweiterten AT-Befehls geändert werden.

10. Datenkarte, umfassend:
eine Ermittlungskomponente, die ausgelegt ist, um einen Verwendungszustand der Speicherkarte während der Initialisierung der Datenkarte zu ermitteln, nachdem eine Datenkarte mit einem Endgerät verbunden ist und eine Speicherkarte in die Datenkarte eingesetzt ist;
eine Änderungskomponente, die ausgelegt ist, um Konfigurationsinformationen in der Datenkarte zu ändern, wenn der Verwendungszustand der Speicherkarte geändert wird, wenn zweimal erfasste Änderungskennwörter übereinstimmen; und
eine Betriebskomponente, die ausgelegt ist, um gemäß den geänderten Konfigurationsinformationen den Verwendungszustand der Speicherkarte erneut zu ermitteln und eine entsprechende Operation auf der Speicherkarte gemäß dem erneut ermittelten Verwendungszustand durchzuführen.

11. Datenkarte nach Anspruch 10, wobei die Ermittlungskomponente ausgelegt ist, um den Verwendungszustand der Speicherkarte durch Lesen der Konfigurationsinformationen in der Datenkarte während der Initialisierung der Datenkarte zu ermitteln, wobei der Verwendungszustand einen aktivierten Zustand und einen deaktivierten Zustand umfasst.

12. Datenkarte nach Anspruch 11, wobei bei einer Änderung des aktuellen Verwendungszustands der Speicherkarte vom aktivierten Zustand in den deaktivierten Zustand die Änderungsoperationskomponente umfasst:
ein erstes Erfassungselement, das ausgelegt ist, um ein nacheinander eingegebenes erstes Änderungskennwort und zweites Änderungskennwort zu erfassen, wenn die Speicherkarte zum ersten Mal deaktiviert wird;
ein erstes Änderungselement, das ausgelegt ist, um die Konfigurationsinformationen in der Datenkarte zu ändern, wenn das zweite Änderungskennwort mit dem ersten Änderungskennwort übereinstimmt;
ein zweites Erfassungselement, das ausgelegt ist, um eine erste Änderungskennworteingabe und ein vorab gespeichertes Änderungskennwort in der Datenkarte zu erfassen, wenn die Speicherkarte nicht zum ersten Mal deaktiviert wird;
ein zweites Änderungselement, das ausgelegt ist, um die Konfigurationsinformationen in der Datenkarte zu ändern, wenn das in der Datenkarte vorab gespeicherte Änderungskennwort mit dem ersten Änderungskennwort übereinstimmt.

13. Datenkarte nach Anspruch 11, wobei bei einer Änderung des aktuellen Verwendungszustands der Speicherkarte vom deaktivierten Zustand in den aktivierten Zustand die Änderungskomponente umfasst:
ein drittes Erfassungselement, das ausgelegt ist, um eine erste Änderungskennworteingabe und ein vorab gespeichertes Änderungskennwort in der Datenkarte zu erfassen;
ein drittes Änderungselement, das ausgelegt ist, um die Konfigurationsinformationen in der Datenkarte zu ändern, wenn das erste Änderungskennwort mit dem vorab gespeicherten Änderungskennwort in der Datenkarte übereinstimmt.

14. Datenkarte nach Anspruch 10, ferner umfassend: eine Kennwortänderungskomponente, die ausgelegt ist, um in einem Fall, dass ein vorab gespeichertes Änderungskennwort in der Datenkarte vorliegt, das vorab gespeicherte Änderungskennwort in der Datenkarte zu ändern und das geänderte Änderungskennwort zu speichern.

## Revendications

1. Procédé d'application d'une carte de données, comprenant :
une fois qu'une carte de données est connectée à un terminal et qu'une carte mémoire est insérée dans la carte de données, la détermination d'un état d'utilisation de la carte mémoire pendant l'initialisation de la carte de données ;
lorsque l'état d'utilisation de la carte mémoire est modifié, la modification des informations de configuration de la carte de données lorsque les mots de passe de modification acquis deux fois sont conformes ; et
la nouvelle détermination de l'état d'utilisation de la carte mémoire en fonction des informations de configuration modifiées et la réalisation d'une opération correspondante sur la carte mémoire en fonction de l'état d'utilisation déterminé une nouvelle fois.

2. Procédé d'application de carte de données selon la revendication 1, dans lequel, une fois que la carte de données est connectée au terminal et que la carte mémoire est insérée dans la carte de données, la détermination de l'état d'utilisation de la carte mémoire pendant l'initialisation de la carte de données comprend :
la détermination de l'état d'utilisation de la carte mémoire par lecture des informations de configuration de la carte de données lors de l'initialisation de la carte de données, l'état d'utilisation comprenant un état activé et un état désactivé.

3. Procédé d'application de carte de données selon la revendication 2, dans lequel, lorsque l'état d'utilisation actuel de la carte mémoire est modifié de l'état activé à l'état désactivé et que les mots de passe de modification acquis deux fois sont conformes, la modification des informations de configuration de la carte de données comprend :
lorsqu'il s'agit de la première désactivation de la carte mémoire, l'acquisition successive d'un premier mot de passe de modification et d'un second mot de passe de modification ;
lorsque le second mot de passe de modification est conforme au premier mot de passe de modification, la modification des informations de configuration de la carte de données ;
quand il ne s'agit pas la première désactivation de la carte mémoire, acquisition d'une première entrée de mot de passe de modification et d'un mot de passe de modification pré-enregistré de la carte de données ;
lorsque le mot de passe de modification pré-enregistré de la carte de données est conforme au premier mot de passe de modification, la modification des informations de configuration de la carte de données.

4. Procédé d'application de carte de données selon la revendication 2, dans lequel, lorsque l'état d'utilisation actuel de la carte mémoire est modifié de l'état désactivé à l'état activé et que les mots de passe de modification acquis deux fois sont conformes, la modification des informations de configuration de la carte de données comprend :
l'acquisition d'une première entrée de mot de passe de modification et d'un mot de passe de modification pré-enregistré de la carte de données ;
lorsque le premier mot de passe de modification est conforme au mot de passe de modification pré-enregistré de la carte de données, la modification des informations de configuration de la carte de données.

5. Procédé d'application de carte de données selon l'une quelconque des revendications 2 à 4, dans lequel
dans le cas où les informations de configuration de la carte de données indiquent que l'état d'utilisation de la carte mémoire est l'état activé, le montage de la carte mémoire en tant que périphérique de stockage du terminal lors de l'initialisation de la carte de données, pour que le terminal et la carte mémoire soient interconnectés ;
dans le cas où les informations de configuration de la carte de données indiquent que l'état d'utilisation de la carte mémoire est désactivé, l'interdiction pour la carte mémoire de s'interconnecter avec le terminal pendant l'initialisation de la carte de données ou son retrait.

6. Procédé d'application de carte de données selon la revendication 1, comprenant en outre : dans le cas où il existe un mot de passe de modification pré-enregistré de la carte de données, la modification du mot de passe de modification pré-enregistré de la carte de données et la mémorisation du mot de passe de modification modifié.

7. Procédé d'application de carte de données selon l'une quelconque des revendications 1 à 6, dans lequel, dans le cas où la carte mémoire n'est pas insérée dans la carte de données, il est interdit de modifier les informations de configuration de la carte de données.

8. Procédé d'application de carte de données selon l'une quelconque des revendications 1 à 6, dans lequel la carte mémoire est une carte Secure Digital (SD).

9. Procédé d'application de carte de données selon l'une quelconque des revendications 1 à 6, dans lequel les informations de configuration sont modifiées par l'intermédiaire d'un gestionnaire de connexion de la carte de données à l'aide d'une commande AT étendue.

10. Carte de données comprenant :
un composant de détermination, qui est configuré pour déterminer, une fois qu'une carte de données est connectée à un terminal et qu'une carte mémoire est insérée dans la carte de données, un état d'utilisation de la carte mémoire pendant l'initialisation de la carte de données ;
un composant de modification, qui est configuré pour modifier des informations de configuration de la carte de données, lorsque l'état d'utilisation de la carte mémoire est modifié et que des mots de passe de modification acquis deux fois sont conformes ; et
un composant d'opération, qui est configuré pour déterminer à nouveau l'état d'utilisation de la carte mémoire en fonction des informations de configuration modifiées et pour effectuer une opération correspondante sur la carte mémoire, en fonction de l'état d'utilisation déterminé une nouvelle fois.

11. Carte de données selon la revendication 10, dans laquelle le composant de détermination est configuré pour déterminer l'état d'utilisation de la carte mémoire en lisant les informations de configuration de la carte de données pendant l'initialisation de la carte de données, l'état d'utilisation comprenant un état activé et état désactivé.

12. Carte de données selon la revendication 11, dans laquelle, lorsque l'état d'utilisation actuel de la carte mémoire est modifié de l'état activé à l'état désactivé, le composant d'opération de modification comprend :
un premier élément d'acquisition, qui est configuré pour acquérir un premier mot de passe de modification et une seconde entrée de mot de passe de modification successivement lorsqu'il s'agit de la première désactivation de la carte mémoire ;
un premier élément de modification, qui est configuré pour modifier les informations de configuration de la carte de données lorsque le second mot de passe de modification est conforme au premier mot de passe de modification ;
un deuxième élément d'acquisition, qui est configuré pour acquérir une première entrée de mot de passe de modification et un mot de passe de modification pré-enregistré de la carte de données lorsqu'il ne s'agit pas de la première désactivation de la carte mémoire ;
un deuxième élément de modification, qui est configuré pour modifier les informations de configuration de la carte de données lorsque le mot de passe de modification pré-enregistré de la carte de données est conforme au premier mot de passe de modification.

13. Carte de données selon la revendication 11, dans laquelle, lorsque l'état d'utilisation actuel de la carte mémoire est modifié de l'état désactivé à l'état activé, le composant de modification comprend :
un troisième élément d'acquisition, qui est configuré pour acquérir une première entrée de mot de passe de modification et un mot de passe de modification pré-enregistré de la carte de données ;
un troisième élément de modification, qui est configuré pour modifier les informations de configuration de la carte de données lorsque le premier mot de passe de modification est conforme au mot de passe de modification pré-enregistré de la carte de données.

14. Carte de données selon la revendication 10, comprenant en outre : un composant de modification de mot de passe, qui est configuré pour, dans le cas où il existe un mot de passe de modification pré-enregistré de la carte de données, modifier le mot de passe de modification pré-enregistré de la carte de données et pour enregistrer le mot de passe de modification modifié.
